# EUROPEAN PATENT APPLICATION

(11) **EP 4 443 993 A1**
(43) Date of publication of application: **09.10.2024**
(21) Application number: 22900466.8
(22) Date of filing: 29.11.2022
(51) Int. Cl.: H04W 64/00

(54) **POSITIONING METHOD AND COMMUNICATION DEVICE**

(30) Priority: 30.11.2021 CN 202111450538
(71) Applicant: VIVO MOBILE COMMUNICATION CO., LTD., Dongguan, Guangdong 523863 (CN)
(72) Inventor: WANG, Yuanyuan, Dongguan, Guangdong 523863 (CN); SUN, Peng, Dongguan, Guangdong 523863 (CN)
(74) Representative: Lavoix
(86) International application number: PCT/CN2022/135040
(87) International publication number: WO 2023/098662

(57) **Abstract**

This application discloses a positioning method and a communication device, and pertains to the field of wireless communication technologies. The positioning method of embodiments of this application includes: receiving, by a first communication device, first positioning request information; and determining and/or sending, by the first communication device, an artificial intelligence network model and/or artificial intelligence network model parameter in response to the first positioning request information, where the artificial intelligence network model is used for obtaining or optimizing positioning signal measurement information of a target terminal and/or location information of a target terminal.

## Description

### CROSS-REFERENCE TO RELATED APPLICATIONS

This application claims priority to Chinese Patent Application No. 202111450538.9, filed in China on November 30, 2021, which is incorporated herein by reference in its entirety.

### TECHNICAL FIELD

This application pertains to the field of communication technologies and specifically relates to a positioning method and apparatus and a communication device.

### BACKGROUND

New radio (New Radio, NR) positioning is positioning based on signal measurement between the network side and user equipments (User Equipment, UE), also referred to as terminals. Currently, in the field of wireless communication networks, terminals usually directly perform positioning based on positioning signal measurement information. However, in a complex multipath or non-line-of-sight (Non-Light Of Sight, NLOS) environment, the positioning result often has errors and cannot meet the requirement.

### SUMMARY

Embodiments of this application provide a positioning method and a communication device, which can solve the problem that the existing method cannot meet the requirement due to errors caused by directly performing positioning based on a positioning signal measurement result.

According to a first aspect, a positioning method is provided and includes:
receiving, by a first communication device, first positioning request information; and
determining and/or sending, by the first communication device, a target artificial intelligence network model and/or target artificial intelligence network model parameter in response to the first positioning request information, where the target artificial intelligence network model is used for obtaining or optimizing positioning signal measurement information of a target terminal and/or location information of a target terminal.

According to a second aspect, a positioning method is provided and includes:
sending, by a second communication device, first positioning request information; and
receiving, by the second communication device, a target artificial intelligence network model and/or target artificial intelligence network model parameter, where the target artificial intelligence network model is used for obtaining or optimizing positioning signal measurement information of a target terminal and/or location information of a target terminal.

According to a third aspect, a positioning apparatus is provided and includes:
a first receiving module configured to receive first positioning request information; and
a first determining module configured to determine and/or send a target artificial intelligence network model and/or target artificial intelligence network model parameter in response to the first positioning request information, where the target artificial intelligence network model is used for obtaining or optimizing positioning signal measurement information of a target terminal and/or location information of a target terminal.

According to a fourth aspect, a positioning apparatus is provided and includes:
a first sending module configured to send first positioning request information; and
a first receiving module configured to receive a target artificial intelligence network model and/or target artificial intelligence network model parameter, where the target artificial intelligence network model is used for obtaining or optimizing positioning signal measurement information of a target terminal and/or location information of a target terminal.

According to a fifth aspect, a communication device is provided. The terminal includes a processor and a memory. The memory stores a program or instructions capable of running on the processor. When the program or instructions are executed by the processor, the steps of the method according to the first or second aspect are implemented.

According to a sixth aspect, a communication device is provided and includes a processor and a communication interface. The communication interface is configured to receive first positioning request information. The processor is configured to determine and/or send a target artificial intelligence network model and/or target artificial intelligence network model parameter in response to the first positioning request information, where the target artificial intelligence network model is used for obtaining or optimizing positioning signal measurement information of a target terminal and/or location information of a target terminal.

According to a seventh aspect, a communication device is provided and includes a processor and a communication interface. The communication interface is configured to send first positioning request information and receive a target artificial intelligence network model and/or target artificial intelligence network model parameter, where the target artificial intelligence network model is used for obtaining or optimizing positioning signal measurement information of a target terminal and/or location information of a target terminal.

According to an eighth aspect, a readable storage medium is provided, where the readable storage medium stores a program or instructions, and when the program or instructions are executed by a processor, the steps of the method according to the first aspect or the second aspect are implemented.

According to a ninth aspect, a chip is provided. The chip includes a processor and a communication interface, where the communication interface is coupled to the processor, and the processor is configured to run a program or instructions to implement the method according to the first aspect or second aspect.

According to a tenth aspect, a computer program or program product is provided. The computer program or program product is stored in a storage medium. The computer program or program product is executed by at least one processor to implement the steps of the method according to the first aspect or second aspect.

According to an eleventh aspect, a communication device is provided and configured to execute the steps of the method according to the first or second aspect.

In the embodiments of this application, the first communication device negotiates, with the second communication device in response to the request of the second communication device, the artificial intelligence network model and/or artificial intelligence network model parameter used for obtaining or optimizing the positioning signal measurement information of the target terminal and/or location information of the target terminal. This allows the positioning signal measurement information and/or location information of the target terminal to be obtained or optimized based on the artificial intelligence network model negotiated, thereby reducing positioning errors and improving accuracy of positioning results.

### BRIEF DESCRIPTION OF DRAWINGS

FIG. 1 is a block diagram of a wireless communication system to which embodiments of this application may be applied;
FIG. 2 is a schematic diagram of a neural network according to an embodiment of this application;
FIG. 3 is a schematic diagram of a neuron according to an embodiment of this application;
FIG. 4A is a schematic flowchart of a positioning method according to an embodiment of this application;
FIG. 4B is a schematic flowchart of a positioning method according to another embodiment of this application;
FIG. 5 is a schematic flowchart of a positioning method according to a first embodiment of this application;
FIG. 6 is a schematic structural diagram of a positioning apparatus according to a second embodiment of this application;
FIG. 7 is a schematic structural diagram of a positioning apparatus according to a third embodiment of this application;
FIG. 8A is a schematic structural diagram of a communication device according to an embodiment of this application;
FIG. 8B is a schematic structural diagram of a communication device according to another embodiment of this application;
FIG. 9 is a schematic structural diagram of a communication device according to still another embodiment of this application;
FIG. 10 is a schematic diagram of a hardware structure of a terminal according to an embodiment of this application;
FIG. 11 is a schematic diagram of a hardware structure of a network-side device according to an embodiment of this application; and
FIG. 12 is a schematic diagram of a hardware structure of a network-side device according to another embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

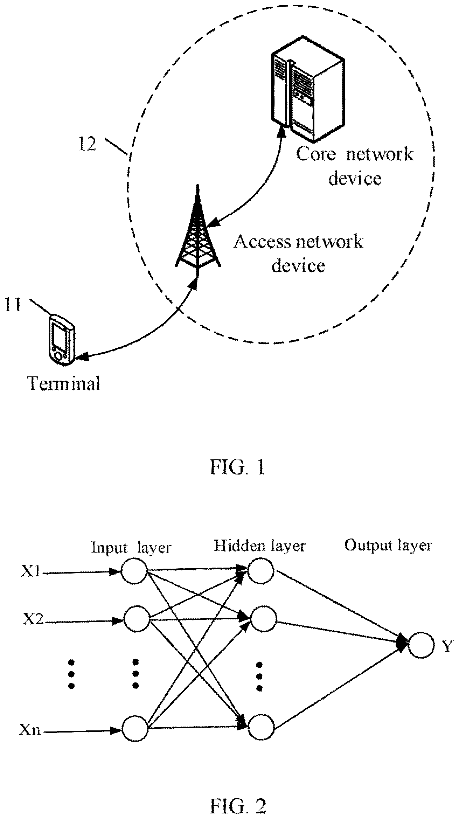

FIG. 1 is a block diagram of a wireless communication system to which embodiments of this application may be applied. The wireless communication system includes a terminal 11 and a network-side device 12. The terminal 11 may be a terminal-side device, such as a mobile phone, a tablet personal computer (Tablet Personal Computer, TPC), a laptop computer (Laptop computer, LC) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR)/virtual reality (virtual reality, VR) device, a robot, a wearable device (Wearable Device, WD), vehicle user equipment (Vehicle User Equipment, VUE), or pedestrian user equipment (Pedestrian User Equipment, PUE), a smart appliance (a home appliance with a wireless communication function, for example, a refrigerator, a television, a washing machine, or furniture), a game console, a personal computer (Personal Computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include base stations, wireless local area network (Wireless Local Area Networks, WLAN) access points, wireless fidelity (Wireless Fidelity, WiFi) nodes, or the like. The base station may be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmission-reception point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device may include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized Network Configuration, CNC), network repository function (Network Repository Function, NRF), network exposure function (Network Exposure Function, NEF), local NEF (Local NEF, L-NEF), binding support function (Binding Support Function, BSF), application function (Application Function, AF), location manage function (Location Manage Function, LMF), E-SMLC, NWDAF (network data analytics function), and the like. It should be noted that in the embodiments of this application, only the core network device in the NR system is introduced as an example, and the specific type of the core network device is not limited.

The following describes in detail the positioning method and communication device provided in the embodiments of this application through some embodiments and application scenarios thereof with reference to the accompanying drawings.

First, the artificial intelligence (Artificial Intelligence, AI) network model used in the embodiments of this application is described.

Artificial intelligence network models have been widely used in various fields. Artificial intelligence network models are implemented in many manners, for example, in a form of neural network, decision tree, support vector machine, and Bayesian classifier. This application takes the neural network as an example for description, but the application of other foregoing artificial intelligence network models is not limited.

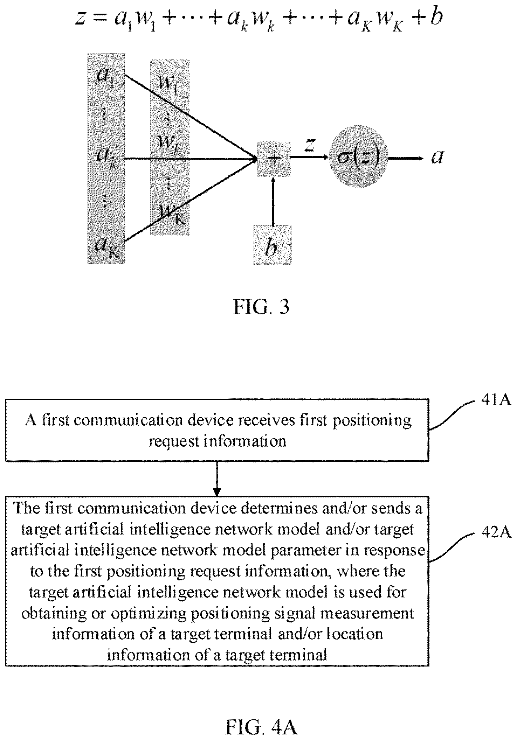

A schematic diagram of a neural network is shown in FIG. 2. The neural network is composed of neurons, and a neuron is shown in FIG. 3, where a1, a2,..., and aK are inputs, w is a weight (multiplicative coefficient), b is a bias (additive coefficient), and σ(.) is an activation function. Common activation functions include Sigmoid, tanh, linear rectification function, rectified linear unit (Rectified Linear Unit, ReLU), and the like.

Parameters of neural networks are optimized by optimization algorithms. An optimization algorithm is an algorithm that can help to minimize or maximize an objective function (sometimes also referred to as a loss function). An objective function is often a mathematical combination of model parameters and data. For example, given data X and its corresponding label Y (that is, true value), a neural network model f(.) is constructed. After the model is constructed, a predicted output f(x) may be obtained based on the input X, and a deviation (f(x)-Y) between the predicted value and the true value may be calculated, which is a loss function. The objective is to find the appropriate w and b to minimize the value of the loss function. A smaller loss value means that the model is closer to reality.

Common optimization algorithms are basically based on the error back propagation (error Back Propagation, BP) algorithm. The basic idea of the BP algorithm is that a learning process consists of two processes: signal forward propagation of and error backward propagation. During forward propagation, an input sample is input from an input layer, processed by hidden layers layer by layer, and transmitted to an output layer. If an actual output of the output layer does not match an expected output, the stage of error backward propagation proceeds. The error back propagation is to transmit an output error back to the input layer in some way through the hidden layers layer by layer, and distribute the error to all units of each layer, so as to obtain an error signal of each unit of each layer. The error signal is used as a basis for correcting a weight of each unit. This process of adjusting the weight of each layer in signal forward propagation and error backward propagation is repeated over and over again. The process of continuous weight adjustment is also a learning training process of a network. This process continues until an error of network output is reduced to an acceptable level, or until a preset learning count is reached.

Common optimization algorithms include gradient descent (Gradient Descent), stochastic gradient descent (Stochastic Gradient Descent, SGD), mini-batch gradient descent (mini-batch gradient descent), momentum (Momentum), Nesterov (inventor's name, specifically meaning stochastic gradient descent with momentum), adaptive gradient descent (ADAptive GRADient descent, Adagrad), Adadelta, root mean square prop (Root Mean Square prop, RMSprop), adaptive moment estimation (Adaptive Moment Estimation, Adam), and the like.

In these optimization algorithms, an error/loss is obtained from a loss function in error backward propagation, a derivative/partial derivative of a current neuron is obtained, and a learning rate, a previous gradient/derivative/partial derivative, and the like are considered, to obtain a gradient. The gradient is transmitted to an upper layer.

To solve the problem that the existing method cannot meet the requirement due to errors caused by directly performing positioning based on a positioning signal measurement result, referring to FIG. 4A, an embodiment of this application provides a positioning method including the following steps.

Step 41A. A first communication device receives first positioning request information.

Step 42A. The first communication device determines and/or sends a target artificial intelligence network model and/or target artificial intelligence network model parameter in response to the first positioning request information, where the target artificial intelligence network model is used for obtaining or optimizing positioning signal measurement information of a target terminal and/or location information of a target terminal.

In this embodiment of this application, the first communication device negotiates, with a second communication device in response to the request of the second communication device, the artificial intelligence network model and/or artificial intelligence network model parameter used for obtaining or optimizing the positioning signal measurement information of the target terminal and/or location information of the target terminal. This allows the positioning signal measurement information and/or location information of the target terminal to be obtained or optimized based on the artificial intelligence network model negotiated, thereby reducing positioning errors and improving accuracy of positioning results.

In this embodiment of this application, optionally, the first communication device is a network-side device, such as an LMF or an evolved serving mobile location center (Evolved Serving Mobile Location Center, E-SMLC), or an artificial intelligence or machine learning processing function module, such as a network data analytics function (Network Data Analytics Function, NWDAF).

In this embodiment of this application, optionally, the second communication device is a terminal or a network-side device, and the network-side device is, for example, an LMF, an E-SMLC, or a base station.

In this embodiment of this application, optionally, the first communication device is a terminal, a base station, or an LMF, and the second communication device is an artificial intelligence or machine learning processing function module or an LMF.

In this embodiment of this application, optionally, the first positioning request information includes at least one of the following:
first measurement information;
identity document (Identity Document, ID) of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, where the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

Further, in an embodiment, in a case that the first communication device is a terminal, the terminal receives the first indication information, indicating that the artificial intelligence network model is used by the terminal to perform positioning, for example, used by the terminal to obtain or optimize positioning signal measurement information and/or location information. Additionally/alternatively, the terminal receives the identity document ID of artificial intelligence network model and/or artificial intelligence network model parameter, indicating that the artificial intelligence network model is used by the terminal to perform positioning, for example, used by the terminal to obtain or optimize positioning signal measurement information and/or location information. Additionally/alternatively, the terminal receives the complexity information of the artificial intelligence network model, used to indicate the condition or complexity threshold for the terminal to end the iteration of the artificial intelligence network model. Additionally/alternatively, the terminal receives some or all of the artificial intelligence network model parameters, used to update the artificial intelligence network model and/or parameter used by the terminal to perform positioning, for example, used by the terminal to obtain or optimize positioning signal measurement information and/or location information. The terminal receives the type information of the artificial intelligence network model, used to assist the terminal in selecting the artificial intelligence network model and/or parameter used for positioning.

Further, in an embodiment, in a case that the first communication device is a network-side device, the network-side device receives the first indication information, indicating that the terminal expects to use the artificial intelligence network model to perform positioning. For example, the terminal wants to obtain or optimize positioning signal measurement information and/or location information through the artificial intelligence network model. Additionally/alternatively, the network-side device receives the identity document ID of the artificial intelligence network model and/or artificial intelligence network model parameter, indicating that the artificial intelligence network model is used by the terminal to perform positioning, or is expected to be activated and configured with an artificial intelligence network model and/or artificial intelligence network model parameter corresponding to the ID. Additionally/alternatively, the network-side device receives the complexity information of the artificial intelligence network model, used to indicate the condition or complexity threshold for the iteration of the artificial intelligence network model that the terminal expects. Additionally/alternatively, the network-side device receives some or all of the artificial intelligence network model parameters, used to indicate the artificial intelligence network model and/or parameter that the terminal expects to use in positioning, for example, in obtaining or optimizing positioning signal measurement information and/or location information. The network-side device receives the type information of the artificial intelligence network model, used to indicate the artificial intelligence network model and/or parameter that the terminal expects to use in positioning.

Furthermore, in an embodiment, in a case that the first communication device is a first network-side device, the first network-side device receives the first indication information, indicating that a second network-side device expects the first network-side device to use the artificial intelligence network model to perform positioning. For example, the second network-side device wants to obtain or optimize positioning signal measurement information and/or location information through the artificial intelligence network model. Additionally/alternatively, the first network-side device receives the identity document ID of the artificial intelligence network model and/or artificial intelligence network model parameter, indicating that the second network-side device indicates that the artificial intelligence network model has been used by the first network-side device to perform positioning or is expected to be activated and configured with an artificial intelligence network model and/or artificial intelligence network model parameters corresponding to the ID. Additionally/alternatively, the first network-side device receives the complexity information of the artificial intelligence network model, used for condition or complexity threshold for the iteration of the artificial intelligence network model indicated by the second network-side device. Additionally/alternatively, the first network-side device receives some or all of the artificial intelligence network model parameters, used by the first network-side device to indicate the artificial intelligence network model and/or parameter used for positioning. The first network-side device receives the type information of the artificial intelligence network model, used to indicate the artificial intelligence network model and/or parameter used for positioning.

The following separately describes the first positioning request information.

In this embodiment of this application, optionally, the first measurement information is used to assist the first communication device in determining and/or sending a target artificial intelligence network model and/or target artificial intelligence network model parameter. The first measurement information includes at least one of the following:
positioning signal measurement information of the target terminal;
location information of the target terminal; where the location information may be absolute location information (for example, longitude and latitude information), or relative location information; and
error information, where the error information includes at least one of the following: location error value, measurement error value, and artificial intelligence network model error value or parameter error value.

Optionally, the positioning signal measurement information and/or location signal may be obtained through observed time difference of arrival (Observed Time Difference of Arrival, OTDOA), global navigation satellite system (Global Navigation Satellite System, GNSS), downlink difference of arrival (Downlink Difference of Arrival, DL-TDOA), uplink difference of arrival (Uplink Difference of Arrival, UL-TDOA), uplink angle of arrival (Angle of Arrival, AoA), angle of departure (Angle of Departure, AoD), round-trip time (Round Trip Time, RTT), multi-round trip time (Multi-RTT), Bluetooth, sensor, or Wi-Fi.

In this embodiment of this application, optionally, the positioning signal measurement information of the target terminal includes at least one of the following:
reference signal time difference (Reference Signal Time Difference, RSTD) measurement result;
round-trip delay (Round Trip Time, RTT);
angle of arrival (Angle of Arrival, AOA) measurement result;
angle of departure (Angle of Departure, AOD) measurement result; and
reference signal received power (Reference Signal Received Power, RSRP).

In this embodiment of this application, optionally, the positioning signal measurement information is associated with or includes at least one piece of line of sight (Line of Sight, LOS) indication information.

In this embodiment of this application, optionally, the positioning signal measurement information includes positioning signal measurement information of at least one path (path).

In this embodiment of this application, optionally, the positioning signal measurement information includes at least one of the following.
(1) Angle information of path, for example, path AOA or path AoD.
(2) Time information of path.
   The time information is, for example, the reference signal time difference measurement result of path (Reference Signal Time Difference, additional path RSTD, or path RSTD), the round-trip time of path (round-trip time, Path RTT), or the TOA of path, or the rx-tx (receive-transmit) measurement result of path.
(3) Energy information of path, for example, RSRPP (path RSRP).
(4) LOS indication information.

In this embodiment of this application, optionally, the positioning signal measurement information of the at least one path includes at least one piece of LOS indication information. Further, optionally, the positioning signal measurement information of each path includes one piece of LOS indication information.

Optionally, the positioning signal measurement information of at least one path may be understood as positioning signal measurement information corresponding to one timestamp including positioning signal measurement information of at least two paths in an embodiment, or may be understood as one piece of positioning signal identification information being associated with positioning signal measurement information of at least one path in another embodiment.

In addition, in an embodiment, the positioning signal measurement information includes positioning signal measurement information of at least one path and positioning signal measurement information that is not path specific, for example, RSRP and RSRPP reported together, path RSTD and RSRPP reported together, path RSTD and RSTD reported together, or path rx-tx and RSRPP reported together.

In this embodiment of this application, optionally, the LOS indication information is used to indicate one of the following:
LOS status between the target terminal and a target transmission-reception point TRP;
LOS status of the target terminal; and
LOS status between the target terminal and one or more positioning reference signal resources of a target TRP.

In this embodiment of this application, optionally, the LOS indication information includes at least one of the following.
(1) First bit used to indicate LOS or non-line-of-sight NLOS.
   For example, 0 or 1 is used to indicate LOS or NLOS.
(2) Second bit used to indicate a probability of being LOS.
   For example, M bits of {0, 0.X, 2*0.X, ..., 1} are used to indicate the probability of being LOS.
(3) Third bit used to indicate a confidence coefficient of being LOS.

In this embodiment of this application, optionally, the LOS indication information includes at least one of the following:
first bit used to indicate whether positioning signal measurement is LOS or non-line-of-sight (Non Line Of Sight, NLOS);
second bit used to indicate a probability of positioning signal measurement being LOS; and
third bit used to indicate a confidence coefficient of positioning signal measurement being LOS.

The LOS status between the terminal and the target transmission-reception point TRP may be understood as whether LOS or NLOS is present between, or whether LOS is present between, or the probability of LOS being present between the terminal and the target transmission-reception point TRP.

The LOS status of the terminal may be understood as the terminal including at least N LOSs or at most M LOSs.

The LOS status between the terminal and the one or more positioning reference signal resources of the target TRP may be understood as indicating an LOS status between the terminal and positioning reference signal A of the target TRP or an LOS status between the terminal and positioning reference signal B of the target TRP. The positioning reference signals A and B indicate designated positioning reference signals and may be extended to ABCDEFGH and the like.

In this embodiment of this application, optionally, the artificial intelligence network model parameter includes at least one of the following.
(1) Structure of artificial intelligence network model.
   For example, the structure includes at least one of the following:
   fully connected neural network, convolutional neural network, recurrent neural network, or residual network;
   combination of multiple small networks, such as fully connected+convolutional or convoluti onal+resi dual;
   number of hidden layers;
   connection manner between input layer and hidden layer, connection manner between multiple hidden layers, and/or connection manner between hidden layer and output layer; and
   number of neurons per layer;
(2) Multiplicative coefficient, additive coefficient and/or activation function of each neuron of artificial intelligence network model.
(3) Complexity information of artificial intelligence network model.
   For example, 1 flop, 100 iterations, hardware conditions, or calculation conditions.
(4) Expected training count of artificial intelligence network model.
(5) Application document of artificial intelligence network model.
   In an embodiment, it may be understood as a general manner of applying an artificial intelligence network model.
(6) Input format of artificial intelligence network model.
   In an embodiment, it may be understood as an information element, an information format, a value range, and the like input to an artificial intelligence network model. For another example, an input format of the first parameter information, an input format of the first measurement information, and so on.
(7) Output format of artificial intelligence network model.

In an embodiment, it may be understood as an information element, an information format, a value range, and the like output by an artificial intelligence network model. For another example, an output format of the second parameter information, an output format of the positioning signal measurement information and/or location information, and so on.

In this embodiment of this application, optionally, the type information of artificial intelligence network model includes at least one of the following:
fully connected model;
first type, where the first type is terminal location information obtained by the first communication device based on the artificial intelligence network model;
second type, where the second type is terminal positioning signal measurement information obtained by the first communication device based on the artificial intelligence network model;
third type, where the third type is terminal positioning signal measurement information obtained by the first communication device under assistance of the second communication device based on the artificial intelligence network model;
fourth type, where the fourth type is terminal location information obtained by a first communication device under assistance of the second communication device based on the artificial intelligence network model;
sixth type, where the sixth type is terminal location information obtained by the second communication device under instruction of the first communication device based on the artificial intelligence network model;
seventh type, where the seventh type is terminal location information obtained by the second communication device under instruction of the first communication device based on the artificial intelligence network model;
eighth type, where the eighth type is one of terminal positioning signal measurement information and terminal location information obtained by the first communication device based on the artificial intelligence network model, or the other of the terminal positioning signal measurement information or terminal location information obtained by the second communication device based on the artificial intelligence network model; and
unsupervised model or supervised model.

In this embodiment of this application, optionally, the first parameter information includes at least one of the following:
length of channel impulse response (channel impulse response, CIR);
start time of channel impulse response (channel impulse response, CIR);
number of paths in multipath, for example, up to 20 paths;
bandwidth of obtaining CIR;
frequency domain information of signal, for example, frequency layer ID, band D, Point A, ARFCN, or Start PRB;
time information, optionally, further including time information of at least one path;
phase information, optionally, further including phase information of at least one path;
energy information, optionally, further including energy information of at least one path;
angle information, optionally, further including angle information of at least one path;
CIR information processed based on third artificial intelligence model or third artificial intelligence model parameter; and
multipath information processed based on third artificial intelligence model or third artificial intelligence model parameter, for example, multipath delay, multipath energy, or multipath angle.

In this embodiment of this application, optionally, the first parameter information further includes at least one of the following:
third artificial intelligence network model structure; and
third artificial intelligence network model parameter.

In this embodiment of this application, optionally, the first positioning request information further includes:
LOS confidence coefficient; and
second information, where the second information may be related to LOS indication information.

In this embodiment of this application, optionally, the second information includes at least one of the following.
(1) Second artificial intelligence network model used to determine LOS indication information.
   It may include some key parameters of the artificial intelligence network model. If the determining is based on a neural network, the network may need to be informed of composition of a training set, specific training parameters, hyper-parameters (hyper-parameter) of the neural network, and the like, or the network may be directly informed of corresponding neural network parameters.
(2) Channel impulse response (Channel Impulse Response, CIR).
(3) Power of first path.
(4) Power of multipath.
   In an embodiment of this application, the power may be absolute power or relative power. For example, the relative power may be power relative to power of signal RSRP. For example, the relative power may be power of multipath relative to power of first path or may be power of multipath relative to power of signal.
(5) Delay of first path.
(6) Time of arrival (Time Of Arrival, TOA) of first path.
(7) Reference signal time difference (Reference Signal Time Difference, RSTD) of first path.
(8) Delay of multipath.
   In an embodiment of this application, the delay may be absolute delay or relative delay. For example, the relative delay may be delay relative to delay of signal. For example, the relative delay may be delay of multipath relative to delay of first path or may be delay of multipath relative to delay of signal.
(9) TOA of multipath.
(10) RSTD of multipath.
(11) Angle of arrival of first path.
(12) Angle of arrival of multipath.
(13) Antenna subcarrier phase difference of first path.
(14) Antenna subcarrier phase difference of multipath.
(15) Average excess delay.
(16) Root mean square delay spread.
(17) Coherence bandwidth.

In this embodiment of this application, optionally, before the determining and/or sending, by the first communication device, a target artificial intelligence network model and/or target artificial intelligence network model parameter in response to the first positioning request information, the method further includes:
sending or receiving, by the first communication device, pre-configured information, where the pre-configured information includes at least one of the following:
one or more pre-configured artificial intelligence network models; and
one or more sets of pre-configured artificial intelligence network model parameters.

In this embodiment of this application, optionally, each pre-configured artificial intelligence network model or artificial intelligence network model parameter includes one piece of ID information. Two description methods may be used for the ID information. The first description method may be using values 1 to N or 0 to N-1, where N is the maximum number of pre-configured artificial intelligence network models or parameters, and each value corresponds to a unique artificial intelligence network model or parameter. The second description method may be using N bits for indication, where N is the maximum number of pre-configured artificial intelligence network models or parameters, the i-th bit is the i-th artificial intelligence network model or parameter, and i belongs to (1 to N).

In this embodiment of this application, optionally, the determining and/or sending, by the first communication device, a target artificial intelligence network model and/or target artificial intelligence network model parameter in response to the first positioning request information further includes:
sending, by the first communication device, at least two target artificial intelligence network models and/or target artificial intelligence network model parameters. Optionally, the first communication device sends at least two target artificial intelligence network models and/or target artificial intelligence network model parameters to the second communication device that sends the first positioning request information.

Optionally, the first communication device sends one target artificial intelligence network model and/or target artificial intelligence network model parameter to both the second communication device and a third communication device.

Optionally, the at least two target artificial intelligence network models and/or target artificial intelligence network model parameters may be a functional split of one artificial intelligence network model and parameter. For example, target artificial intelligence network model 1 performs function 1 (for example, information preprocessing, obtaining positioning signal measurement information of the terminal, or obtaining LOS indication information), and target artificial intelligence network model 2 performs function 2 (for example, information anti-preprocessing, information decoding, or obtaining location information of the terminal).

Optionally, the at least two target artificial intelligence network models and/or target artificial intelligence network model parameters may be distributed artificial intelligence network models and parameters. For example, target artificial intelligence network model 1 is used to update and iterate on target artificial intelligence network model 2.

In this embodiment of this application, optionally, if the first positioning request information includes the first measurement information, the first measurement information is used to assist the first communication device in determining and/or sending a target artificial intelligence network model and/or target artificial intelligence network model parameter. In other words, in an embodiment, the target artificial intelligence network model and/or target artificial intelligence network model parameter sent by the first communication network is selected based on the first measurement information.

In this embodiment of this application, optionally, if the first positioning request information includes the target ID, the first communication device selects a target artificial intelligence network model and/or target artificial intelligence network model parameter corresponding to the target ID. In other words, in an embodiment, the target artificial intelligence network model and/or target artificial intelligence network model parameter sent by the first communication network is the target artificial intelligence network model and/or target artificial intelligence network model parameter corresponding to the target ID.

In this embodiment of this application, optionally, if the first positioning request information includes the artificial intelligence network model, the first communication device selects a target artificial intelligence network model that matches the artificial intelligence network model in the first positioning request information. In other words, in an embodiment, the target artificial intelligence network model and/or target artificial intelligence network model parameter sent by the first communication network is associated with the artificial intelligence network model included in the first positioning request information.

In this embodiment of this application, optionally, if the first positioning request information includes some or all of artificial intelligence network model parameters, the first communication device selects the target artificial intelligence network model parameter that matches the artificial intelligence network model parameter in the first positioning request information.

In this embodiment of this application, optionally, if the first positioning request information includes the complexity information of artificial intelligence network model, the first communication device selects a target artificial intelligence network model that matches the complexity information in the first positioning request information. In other words, in an embodiment, the target artificial intelligence network model and/or target artificial intelligence network model parameter sent by the first communication network matches the complexity information in the first positioning request information.

In this embodiment of this application, optionally, if the first positioning request information includes the type information of artificial intelligence network model, the first communication device selects a target artificial intelligence network model that matches the type information in the first positioning request information. In other words, in an embodiment, the target artificial intelligence network model and/or target artificial intelligence network model parameter sent by the first communication network matches the type information in the first positioning request information.

In this embodiment of this application, optionally, if the first positioning request information includes the first parameter information, the first communication device selects a target artificial intelligence network model/parameter that matches the first parameter information.

In an embodiment of this application, optionally, if the first positioning request information includes the first indication information, and the first indication information indicates a request for an artificial intelligence network model and/or artificial intelligence network model parameter, the first communication device determines and/or sends the target artificial intelligence network model and/or target artificial intelligence network model parameter, and if the first indication information does not indicate a request for an artificial intelligence network model and/or artificial intelligence network model parameter, the first communication device does not need to determine and/or send the target artificial intelligence network model and/or target artificial intelligence network model parameter.

In this embodiment of this application, optionally, the positioning method further includes:
sending, by the first communication device, second parameter information, where the second parameter information includes at least one of the following:
CIR;
multipath measurement result of first positioning reference signal;
time information;
phase information;
angle information;
energy information;
second indication information, where the second indication information is used to indicate whether to obtain or optimize other second parameter information through a fourth artificial intelligence network model structure or fourth artificial intelligence network model parameter, or whether to obtain or optimize the positioning signal measurement information of the target terminal and/or location information of the target terminal through the target artificial intelligence network model;
fourth artificial intelligence network model structure; and
fourth artificial intelligence network model parameter.

Optionally, the second parameter information is determined based on the first parameter information.

In an embodiment, the first communication device sends CIR length information, and expects a CIR length fed back by the second communication device to be the CIR length information in the first parameter.

In an embodiment, the first communication device sends length information of the CIR and the fourth artificial intelligence network model structure and/or fourth artificial intelligence network model parameter, and expects a CIR fed back by the second communication device to be a CIR that is obtained based on the fourth artificial intelligence network model structure and/or fourth artificial intelligence network model parameter and that satisfies the CIR length information in the first parameter.

In an embodiment, the first communication device sends information about number of paths in multipath, and expects the information about number of paths in multipath fed back by the second communication device to be the information about number of paths in multipath in the first parameter.

In an embodiment, the first communication device sends information about number of paths in multipath and time information, and expects the information about number of paths in multipath fed back by the second communication device to be the information about number of paths in multipath in the first parameter and include multipath time information.

In an embodiment, the first communication device sends information about number of paths in multipath, time information, and energy information, and expect the information about number of paths in multipath fed back by the second communication device to be the information about number of paths in multipath in the first parameter and include multipath time information and energy information.

In an embodiment, the first communication device sends information about number of paths in multipath, time information, energy information, and the fourth artificial intelligence network model structure and/or fourth artificial intelligence network model parameter, and expects the information about number of paths in multipath fed back by the second communication device to be the information about number of paths in multipath in the first parameter and include multipath time information and energy information and to be information about number of paths in multipath in the first parameter that is obtained based on the fourth artificial intelligence network model structure and/or fourth artificial intelligence network model parameter and that satisfies the information about number of paths in multipath fed back in the first parameter and include multipath time information and energy information.

In this embodiment of this application, optionally, the positioning method further includes:
reporting, by the first communication device, capability information, where the capability information includes at least one of the following:
whether the artificial intelligence network model or artificial intelligence network model parameter based on the first positioning request information is supported;
whether multiple artificial intelligence network models or multiple sets of artificial intelligence network model parameters are supported; and
whether obtaining or optimizing positioning signal measurement information and/or location information through an artificial intelligence network model or artificial intelligence network model parameter is supported.

The communication device in this embodiment of this application may be a terminal, access network device, or core network device.

The communication device in this embodiment of this application may be a terminal, access network device, or core network device.

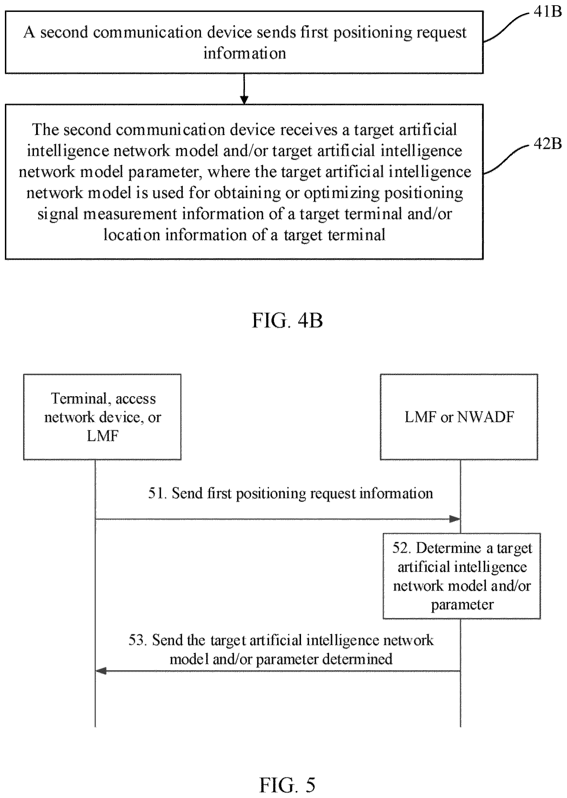

Referring to FIG. 4B, an embodiment of this application provides a positioning method including the following steps.

Step 41B. A second communication device sends first positioning request information.

Step 42B. The second communication device receives a target artificial intelligence network model and/or target artificial intelligence network model parameter, where the target artificial intelligence network model is used for obtaining or optimizing positioning signal measurement information of a target terminal and/or location information of a target terminal.

In this embodiment of this application, a first communication device negotiates, with the second communication device in response to the request of the second communication device, the artificial intelligence network model and/or artificial intelligence network model parameter used for obtaining or optimizing the positioning signal measurement information of the target terminal and/or location information of the target terminal. This allows the positioning signal measurement information and/or location information of the target terminal to be obtained or optimized based on the artificial intelligence network model negotiated, thereby reducing positioning errors and improving accuracy of positioning results.

In this embodiment of this application, optionally, the first positioning request information includes at least one of the following:
first measurement information;
identity document ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, where the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

In this embodiment of this application, optionally, the first measurement information includes at least one of the following:
positioning signal measurement information of the target terminal;
location information of the target terminal; and
error information, where the error information includes at least one of the following: location error value, measurement error value, and artificial intelligence network model error value or parameter error value.

In this embodiment of this application, optionally, the positioning signal measurement information of the target terminal includes at least one of the following:
channel response information of positioning signal;
reference signal time difference RSTD measurement result;
round-trip time RTT;
angle of arrival AOA measurement result;
angle of departure AOD measurement result; and
reference signal received power RSRP.

In this embodiment of this application, optionally, the positioning signal measurement information is associated with or includes at least one piece of line of sight LOS indication information, or includes positioning signal measurement information of at least one path.

In this embodiment of this application, optionally, the LOS indication information includes at least one of the following:
first bit used to indicate LOS or non-line-of-sight NLOS;
second bit used to indicate a probability of being LOS; and
third bit used to indicate a confidence coefficient of being LOS.

In this embodiment of this application, optionally, the LOS indication information includes at least one of the following:
first bit used to indicate whether positioning signal measurement is LOS or non-line-of-sight NLOS;
second bit used to indicate a probability of positioning signal measurement being LOS; and
third bit used to indicate a confidence coefficient of positioning signal measurement being LOS.

In this embodiment of this application, optionally, the artificial intelligence network model parameter includes at least one of the following:
structure of artificial intelligence network model;
multiplicative coefficient, additive coefficient and/or activation function of each neuron of artificial intelligence network model;
complexity information of artificial intelligence network model;
expected training count of artificial intelligence network model;
application document of artificial intelligence network model;
input format of artificial intelligence network model; and
output format of artificial intelligence network model.

In this embodiment of this application, optionally, the type information of artificial intelligence network model includes at least one of the following:
fully connected model;
first type, where the first type is terminal location information obtained by the first communication device based on the artificial intelligence network model;
second type, where the second type is terminal positioning signal measurement information obtained by the first communication device based on the artificial intelligence network model;
third type, where the third type is terminal positioning signal measurement information obtained by the first communication device under assistance of the second communication device based on the artificial intelligence network model;
fourth type, where the fourth type is terminal location information obtained by the first communication device under assistance of the second communication device based on the artificial intelligence network model;
sixth type, where the sixth type is terminal location information obtained by the second communication device under instruction of the first communication device based on the artificial intelligence network model;
seventh type, where the seventh type is terminal location information obtained by the second communication device under instruction of the first communication device based on the artificial intelligence network model;
eighth type, where the eighth type is one of terminal positioning signal measurement information and terminal location information obtained by the first communication device based on the artificial intelligence network model, or the other of the terminal positioning signal measurement information or terminal location information obtained by the second communication device based on the artificial intelligence network model; and
unsupervised model or supervised model.

In this embodiment of this application, optionally, the first positioning request information further includes:
LOS confidence coefficient; and
second information.

In this embodiment of this application, optionally, the second information includes at least one of the following:
second artificial intelligence network model used to determine LOS indication information;
channel impulse response CIR;
power of first path;
power of multipath;
delay of first path;
time of arrival TOA of first path;
reference signal time difference RSTD of first path;
delay of multipath;
TOA of multipath;
RSTD of multipath;
angle of arrival of first path;
angle of arrival of multipath;
antenna subcarrier phase difference of first path;
antenna subcarrier phase difference of multipath;
average excess delay;
root mean square delay spread; and
coherence bandwidth.

In this embodiment of this application, optionally, the first parameter information includes at least one of the following:
length of CIR;
number of paths in multipath;
bandwidth of CIR;
frequency domain information of signal;
time information;
phase information;
angle information;
energy information;
CIR information processed based on third artificial intelligence model or third artificial intelligence model parameter; and
multipath information processed based on third artificial intelligence model or third artificial intelligence model parameter.

In this embodiment of this application, optionally, the first parameter information further includes at least one of the following:
third artificial intelligence network model structure; and
third artificial intelligence network model parameter.

In this embodiment of this application, optionally, the positioning method further includes: sending, by the second communication device, second parameter information, where the second parameter information includes at least one of the following:
CIR;
multipath measurement result of first positioning reference signal;
time information;
phase information;
angle information;
energy information;
second indication information, where the second indication information is used to indicate whether to obtain or optimize other second parameter information through a fourth artificial intelligence network model structure or fourth artificial intelligence network model parameter, or whether to obtain or optimize the positioning signal measurement information of the target terminal and/or location information of the target terminal through the target artificial intelligence network model;
fourth artificial intelligence network model structure; and
fourth artificial intelligence network model parameter.

In this embodiment of this application, optionally, the second parameter information is determined based on the first parameter information.

The following describes the positioning method in this application with reference to specific application scenarios.

Refer to FIG. 5. FIG. 5 is a schematic flowchart of a positioning method according to a first embodiment of this application. The positioning method includes the following steps.

Step 51. A second communication device (terminal, access network device, or location management function (Location Management Function, LMF)) sends first positioning request information to a first communication device (LMF or NWADF). For the specific content of the first positioning request information, reference may be made to the description in the above embodiments, and description is not repeated herein.

Step 52. The first communication device determines a target artificial intelligence network model and/or target artificial intelligence network model parameter in response to the first positioning request information.

For the method of determining the target artificial intelligence network model and/or target artificial intelligence network model parameter in response to the first positioning request information, reference may be made to the description in the above embodiments, and description is not repeated herein.

Step 53. The first communication device sends the target artificial intelligence network model and/or target artificial intelligence network model parameter to the second communication device.

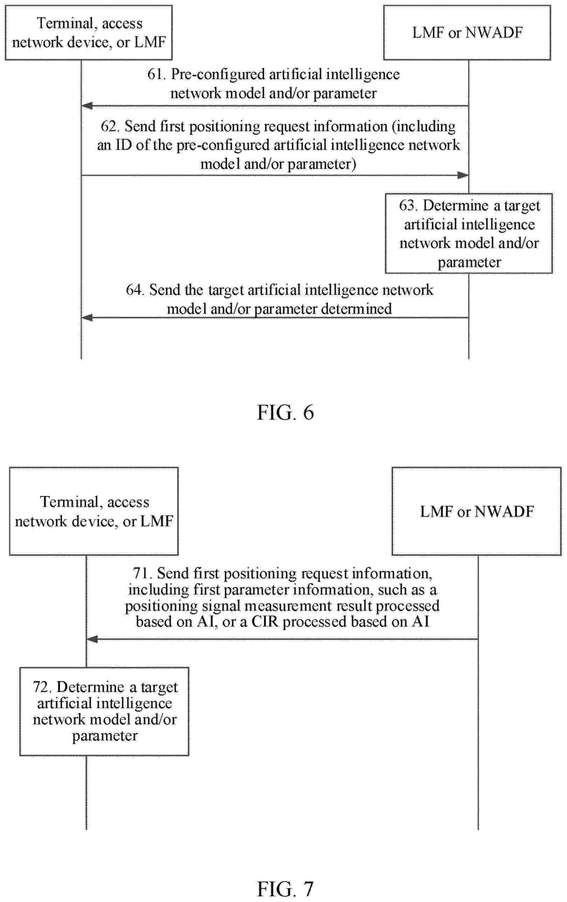

Refer to FIG. 6. FIG. 6 is a schematic flowchart of a positioning method according to a second embodiment of this application. The positioning method includes the following steps.

Step 61. A first communication device (LMF or NWADF) sends a pre-configured artificial intelligence network model and/or artificial intelligence network model parameter to a second communication device (terminal, access network device, or LMF).

Step 62. The second communication device (terminal, access network device, or LMF) sends first positioning request information to the first communication device (LMF or NWADF), where the first positioning request information includes an ID of the pre-configured artificial intelligence network model and/or artificial intelligence network model parameter.

Step 63. The first communication device determines a target artificial intelligence network model and/or target artificial intelligence network model parameter corresponding to the ID.

Step 64. The first communication device sends the target artificial intelligence network model and/or target artificial intelligence network model parameter to the second communication device.

Refer to FIG. 7. FIG. 7 is a schematic flowchart of a positioning method according to a third embodiment of this application. The positioning method includes the following steps.

Step 71. A second communication device (LMF or NWADF) sends first positioning request information to a first communication device (terminal, access network device, or LMF), where the first positioning request information includes first parameter information, such as CIR information processed based on third artificial intelligence model or third artificial intelligence model parameter, or a positioning signal measurement result processed based on third artificial intelligence model or third artificial intelligence model parameter.

Step 72. The first communication device determines a target artificial intelligence network model and/or target artificial intelligence network model parameter based on the first positioning request information, and may obtain, based on the target artificial intelligence network model and/or target artificial intelligence network model parameter determined, positioning signal measurement result and/or location information corresponding to the first parameter information.

The following provides further description to the positioning method of this application.

The artificial intelligence network model of this embodiment of this application includes one or more artificial intelligence network models, and/or one or more sets of artificial intelligence network model parameters.

The artificial intelligence network model of this embodiment of this application may be a machine learning model, neural network model, or deep neural network model, including but not limited to:
convolutional neural network (Convolutional Neural Network, CNN), such as googlenet or AlexNet;
recursive neural network (Recursive Neural Network, RNN) and long short-term memory (Long short-term memory, LSTM);
recursive neural tensor network (Recursive Neural Tensor Network, RNTN);
generative adversarial network (Generative Adversarial Networks, GAN);
deep belief network (Deep Belief Networks, DBN); and
restricted Boltzmann machine (Restricted Boltzmann Machine, RBM).

In this embodiment of this application, the artificial intelligence network model parameter includes a parameter of machine learning model, neural network model or deep neural network model, including but not limited to at least one of the following: weight of each layer, step size, mean, and variance.

In this embodiment of this application, optionally, the input information of artificial intelligence network model includes at least one of the following:
channel impulse response (Channel Impulse Response, CIR);
power delay profile (Power Delay Profile, PDP);
reference signal time difference (Reference Signal Time Difference, RSTD);
round-trip time (Round-trip Time, RTT);
angle of arrival (Angle of Arrival, AoA);
RSRP;
TOA;
power of first path;
power of multipath;
delay of first path;
TOA of first path;
RSTD of first path;
delay of multipath;
TOA of multipath;
RSTD of multipath;
angle of arrival of first path;
angle of arrival of multipath;
antenna subcarrier phase difference of first path;
antenna subcarrier phase difference of multipath;
LoS/NLoS identification information;
average excess delay;
root mean square delay spread; and
coherence bandwidth and the like.

In this embodiment of this application, the above input information may be from a single station or multiple stations. The single or multiple-station information is determined by base station number information delivered by the network side. The base station number includes 1-maxTRPNumber, where maxTRPNumber is the maximum number of TRPs in a specific scenario.

The output information of artificial intelligence network model includes at least one of the following:
location coordinate information;
reference signal time difference (Reference Signal Time Difference, RSTD);
round-trip time (Round-trip Time, RTT);
angle of arrival (Angle of Arrival, AoA);
RSRP;
TOA;
power of first path;
power of multipath;
delay of first path;
time of arrival TOA of first path;
reference signal time difference RSTD of first path;
delay of multipath;
TOA of multipath;
RSTD of multipath;
angle of arrival of first path;
angle of arrival of multipath; and
LoS/NLoS identification information.

The artificial intelligence network model of this embodiment of this application may further include error model information used for location calibration, measurement, and artificial intelligence network model and/or parameter error, including at least one of the following:
(1) network-side estimated error value, where the error value includes at least one of the following: location error value, measurement error value, and artificial intelligence network model error value or parameter error value; and
(2) one or more error models estimated by network side, where the error model further includes one of the following models: location error model, measurement error model, and parameter error model.

The artificial intelligence network model of this embodiment of this application may further include preprocessing model information for processing terminal positioning signal measurement information, including at least one of the following:
filter parameter or structure;
convolutional layer parameter or structure;
pooling layer parameters or structure;
discrete cosine transform (Discrete Cosine Transform, DCT) transform parameter or structure;
wavelet transform parameter or structure; and
parameter or structure of positioning signal measurement information processing method (such as sampling, truncation, normalization, or joint merging).

Optionally, the positioning signal measurement information includes at least one of the following:
channel impulse response CIR;
power delay profile;
reference signal time difference (Reference Signal Time Difference, RSTD);
round-trip time (Round-trip Time, RTT);
angle of arrival (Angle of Arrival, AoA);
RSRP;
TOA;
power of first path;
power of multipath;
delay of first path;
time of arrival TOA of first path;
reference signal time difference RSTD of first path;
delay of multipath;
TOA of multipath;
RSTD of multipath;
angle of arrival of first path;
angle of arrival of multipath; and
antenna subcarrier phase difference of first path;
antenna subcarrier phase difference of multipath;
reference signal waveform; and
related sequence of reference signal.

In this embodiment of this application, the error model information and/or preprocessing model information may be associated and sent with an artificial intelligence network model used to optimize location information. Each artificial intelligence network model corresponds to one piece of error model information and/or preprocessing model information.

The positioning method provided in the embodiments of this application may be executed by a positioning apparatus. In the embodiments of this application, the positioning apparatus performing the positioning method is used to describe the positioning apparatus provided in the embodiments of this application.

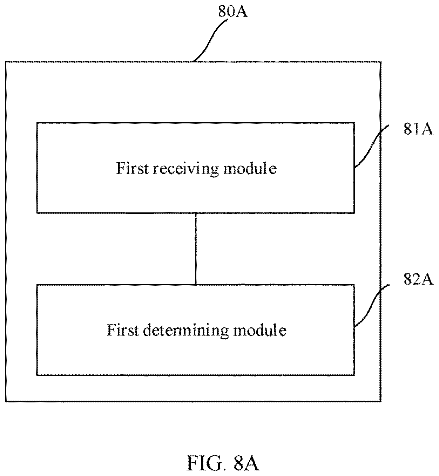

Referring to FIG. 8A, an embodiment of this application provides a positioning apparatus 80A including:
a first receiving module 81A configured to receive first positioning request information; and
a first determining module 82A configured to determine and/or send a target artificial intelligence network model and/or target artificial intelligence network model parameter in response to the first positioning request information, where the target artificial intelligence network model is used for obtaining or optimizing positioning signal measurement information of a target terminal and/or location information of a target terminal.

In this embodiment of this application, the artificial intelligence network model and/or artificial intelligence network model parameter used for obtaining or optimizing the positioning signal measurement information of the target terminal and/or location information of the target terminal is negotiated in response to the request. This allows the positioning signal measurement information and/or location information of the target terminal to be obtained or optimized based on the artificial intelligence network model negotiated, thereby reducing positioning errors and improving accuracy of positioning results.

In this embodiment of this application, optionally, the first positioning request information includes at least one of the following:
first measurement information;
identity document ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, where the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

In this embodiment of this application, optionally, the first measurement information includes at least one of the following:
positioning signal measurement information of the target terminal;
location information of the target terminal; and
error information, where the error information includes at least one of the following: location error value, measurement error value, and artificial intelligence network model error value or parameter error value.

In this embodiment of this application, optionally, the positioning signal measurement information of the target terminal includes at least one of the following:
channel response information of positioning signal;
reference signal time difference RSTD measurement result;
round-trip time RTT;
angle of arrival AOA measurement result;
angle of departure AOD measurement result; and
reference signal received power RSRP.

In this embodiment of this application, optionally, the positioning signal measurement information is associated with or includes at least one piece of line of sight LOS indication information, or includes positioning signal measurement information of at least one path.

In this embodiment of this application, optionally, the LOS indication information includes at least one of the following:
first bit used to indicate LOS or non-line-of-sight NLOS;
second bit used to indicate a probability of being LOS; and
third bit used to indicate a confidence coefficient of being LOS.

In this embodiment of this application, optionally, the LOS indication information includes at least one of the following:
first bit used to indicate whether positioning signal measurement is LOS or non-line-of-sight NLOS;
second bit used to indicate a probability of positioning signal measurement being LOS; and
third bit used to indicate a confidence coefficient of positioning signal measurement being LOS.

In this embodiment of this application, optionally, the artificial intelligence network model parameter includes at least one of the following:
structure of artificial intelligence network model;
multiplicative coefficient, additive coefficient and/or activation function of each neuron of artificial intelligence network model;
complexity information of artificial intelligence network model;
expected training count of artificial intelligence network model;
application document of artificial intelligence network model;
input format of artificial intelligence network model; and
output format of artificial intelligence network model.

In this embodiment of this application, optionally, the type information of artificial intelligence network model includes at least one of the following:
fully connected model;
first type, where the first type is terminal location information obtained by a first communication device based on the artificial intelligence network model;
second type, where the second type is terminal positioning signal measurement information obtained by the first communication device based on the artificial intelligence network model;
third type, where the third type is terminal positioning signal measurement information obtained by the first communication device under assistance of a second communication device based on the artificial intelligence network model;
fourth type, where the fourth type is terminal location information obtained by the first communication device under assistance of the second communication device based on the artificial intelligence network model;
sixth type, where the sixth type is terminal location information obtained by the second communication device under instruction of the first communication device based on the artificial intelligence network model;
seventh type, where the seventh type is terminal location information obtained by the second communication device under instruction of the first communication device based on the artificial intelligence network model;
eighth type, where the eighth type is one of terminal positioning signal measurement information and terminal location information obtained by the first communication device based on the artificial intelligence network model, or the other of the terminal positioning signal measurement information or terminal location information obtained by the second communication device based on the artificial intelligence network model; and
unsupervised model or supervised model.

In this embodiment of this application, optionally, the positioning apparatus 80 further includes:
a transmission module configured to send or receive pre-configured information, where the pre-configured information includes at least one of the following:
one or more pre-configured artificial intelligence network models; and
one or more sets of pre-configured artificial intelligence network model parameters.

In this embodiment of this application, optionally, each pre-configured artificial intelligence network model or artificial intelligence network model parameter includes one piece of ID information.

In this embodiment of this application, optionally, the positioning apparatus 80A further includes:
a first sending module configured to send at least two target artificial intelligence network models and/or target artificial intelligence network model parameters.

In this embodiment of this application, optionally, the first positioning request information further includes:
LOS confidence coefficient; and
second information.

In this embodiment of this application, optionally, the second information includes at least one of the following:
second artificial intelligence network model used to determine LOS indication information;
channel impulse response CIR;
power of first path;
power of multipath;
delay of first path;
time of arrival TOA of first path;
reference signal time difference RSTD of first path;
delay of multipath;
TOA of multipath;
RSTD of multipath;
angle of arrival of first path;
angle of arrival of multipath; and
antenna subcarrier phase difference of first path;
antenna subcarrier phase difference of multipath;
average excess delay;
root mean square delay spread; and
coherence bandwidth.

In this embodiment of this application, optionally, the first parameter information includes at least one of the following:
length of CIR;
number of paths in multipath;
bandwidth of CIR;
frequency domain information of signal;
time information;
phase information;
angle information;
energy information;
CIR information processed based on third artificial intelligence model or third artificial intelligence model parameter; and
multipath information processed based on third artificial intelligence model or third artificial intelligence model parameter.

In this embodiment of this application, optionally, the first parameter information further includes at least one of the following:
third artificial intelligence network model structure; and
third artificial intelligence network model parameter.

In this embodiment of this application, optionally, the positioning apparatus 80A further includes:
a second sending module configured to send second parameter information, where the second parameter information includes at least one of the following:
CIR;
multipath measurement result of first positioning reference signal;
time information;
phase information;
angle information;
energy information;
second indication information, where the second indication information is used to indicate whether to obtain or optimize other second parameter information through a fourth artificial intelligence network model structure or fourth artificial intelligence network model parameter, or whether to obtain or optimize the positioning signal measurement information of the target terminal and/or location information of the target terminal through the target artificial intelligence network model;
fourth artificial intelligence network model structure; and
fourth artificial intelligence network model parameter.

In this embodiment of this application, optionally, the second parameter information is determined based on the first parameter information.

In this embodiment of this application, optionally, the positioning apparatus 80A further includes:
a reporting module configured to report capability information, where the capability information includes at least one of the following:
whether the artificial intelligence network model or artificial intelligence network model parameter based on the first positioning request information is supported;
whether multiple artificial intelligence network models or multiple sets of artificial intelligence network model parameters are supported; and
whether obtaining or optimizing positioning signal measurement information and/or location information through an artificial intelligence network model or artificial intelligence network model parameter is supported.

The positioning apparatus in this embodiment of this application may be an electronic device, for example an electronic device having an operating system, or may be a component of an electronic device, for example, an integrated circuit or a chip. The electronic device may be a terminal or a device other than terminals. For example, the mobile terminal may include but is not limited to the types of the terminal 11 listed above, and the other devices may be servers, network attached storage (Network Attached Storage, NAS), or the like, which are not specifically limited in the embodiments of this application.

The positioning apparatus provided in this embodiment of this application can implement the processes implemented by the method embodiment in FIG. 4A, with the same technical effects achieved. To avoid repetition, details are not repeated herein.

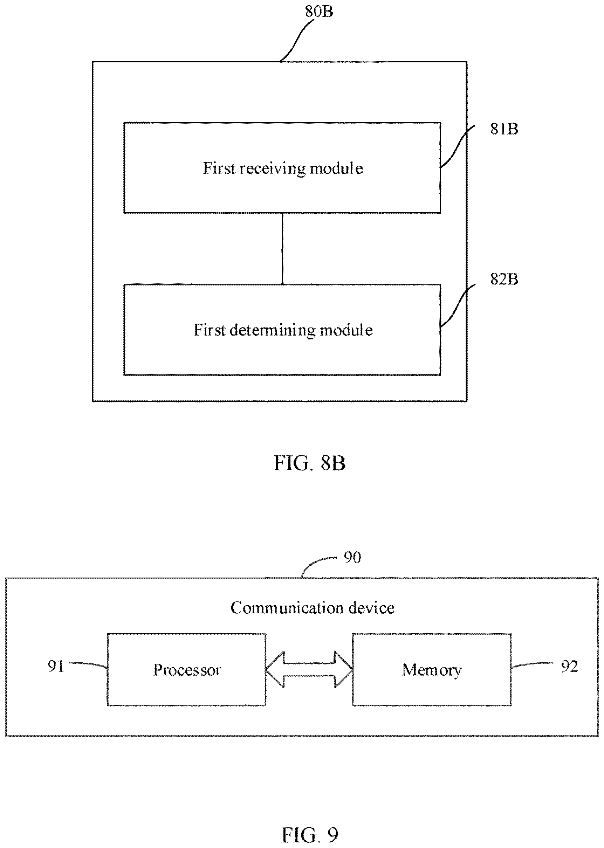

Referring to FIG. 8B, an embodiment of this application provides a positioning apparatus 80B including:
a first sending module 81B configured to send first positioning request information; and
a first receiving module 82B configured to receive a target artificial intelligence network model and/or target artificial intelligence network model parameter, where the target artificial intelligence network model is used for obtaining or optimizing positioning signal measurement information of a target terminal and/or location information of a target terminal.

In this embodiment of this application, the artificial intelligence network model and/or artificial intelligence network model parameter used for obtaining or optimizing the positioning signal measurement information of the target terminal and/or location information of the target terminal is negotiated in response to the request. This allows the positioning signal measurement information and/or location information of the target terminal to be obtained or optimized based on the artificial intelligence network model negotiated, thereby reducing positioning errors and improving accuracy of positioning results.

In this embodiment of this application, optionally, the first positioning request information includes at least one of the following:
first measurement information;
identity document ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, where the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

In this embodiment of this application, optionally, the first measurement information includes at least one of the following:
positioning signal measurement information of the target terminal;
location information of the target terminal; and
error information, where the error information includes at least one of the following: location error value, measurement error value, and artificial intelligence network model error value or parameter error value.

In this embodiment of this application, optionally, the positioning signal measurement information of the target terminal includes at least one of the following:
channel response information of positioning signal;
reference signal time difference RSTD measurement result;
round-trip time RTT;
angle of arrival AOA measurement result;
angle of departure AOD measurement result; and
reference signal received power RSRP.

In this embodiment of this application, optionally, the positioning signal measurement information is associated with or includes at least one piece of line of sight LOS indication information, or includes positioning signal measurement information of at least one path.

In this embodiment of this application, optionally, the LOS indication information includes at least one of the following:
first bit used to indicate LOS or non-line-of-sight NLOS;
second bit used to indicate a probability of being LOS; and
third bit used to indicate a confidence coefficient of being LOS.

In this embodiment of this application, optionally, the LOS indication information includes at least one of the following:
first bit used to indicate whether positioning signal measurement is LOS or non-line-of-sight NLOS;
second bit used to indicate a probability of positioning signal measurement being LOS; and
third bit used to indicate a confidence coefficient of positioning signal measurement being LOS.

In this embodiment of this application, optionally, the artificial intelligence network model parameter includes at least one of the following:
structure of artificial intelligence network model;
multiplicative coefficient, additive coefficient and/or activation function of each neuron of artificial intelligence network model;
complexity information of artificial intelligence network model;
expected training count of artificial intelligence network model;
application document of artificial intelligence network model;
input format of artificial intelligence network model; and
output format of artificial intelligence network model.

In this embodiment of this application, optionally, the type information of artificial intelligence network model includes at least one of the following:
fully connected model;
first type, where the first type is terminal location information obtained by a first communication device based on the artificial intelligence network model;
second type, where the second type is terminal positioning signal measurement information obtained by the first communication device based on the artificial intelligence network model;
third type, where the third type is terminal positioning signal measurement information obtained by the first communication device under assistance of a second communication device based on the artificial intelligence network model;
fourth type, where the fourth type is terminal location information obtained by the first communication device under assistance of the second communication device based on the artificial intelligence network model;
sixth type, where the sixth type is terminal location information obtained by the second communication device under instruction of the first communication device based on the artificial intelligence network model;
seventh type, where the seventh type is terminal location information obtained by the second communication device under instruction of the first communication device based on the artificial intelligence network model;
eighth type, where the eighth type is one of terminal positioning signal measurement information and terminal location information obtained by the first communication device based on the artificial intelligence network model, or the other of the terminal positioning signal measurement information or terminal location information obtained by the second communication device based on the artificial intelligence network model; and
unsupervised model or supervised model.

In this embodiment of this application, optionally, the first positioning request information further includes:
LOS confidence coefficient; and
second information.

In this embodiment of this application, optionally, the second information includes at least one of the following:
second artificial intelligence network model used to determine LOS indication information;
channel impulse response CIR;
power of first path;
power of multipath;
delay of first path;
time of arrival TOA of first path;
reference signal time difference RSTD of first path;
delay of multipath;
TOA of multipath;
RSTD of multipath;
angle of arrival of first path;
angle of arrival of multipath; and
antenna subcarrier phase difference of first path;
antenna subcarrier phase difference of multipath;
average excess delay;
root mean square delay spread; and
coherence bandwidth.

In this embodiment of this application, optionally, the first parameter information includes at least one of the following:
length of CIR;
number of paths in multipath;
bandwidth of CIR;
frequency domain information of signal;
time information;
phase information;
angle information;
energy information;
CIR information processed based on third artificial intelligence model or third artificial intelligence model parameter; and
multipath information processed based on third artificial intelligence model or third artificial intelligence model parameter.

In this embodiment of this application, optionally, the first parameter information further includes at least one of the following:
third artificial intelligence network model structure; and
third artificial intelligence network model parameter.

In this embodiment of this application, optionally, the positioning apparatus 80B further includes:
a second sending module configured to send second parameter information, where the second parameter information includes at least one of the following:
CIR;
multipath measurement result of first positioning reference signal;
time information;
phase information;
angle information;
energy information;
second indication information, where the second indication information is used to indicate whether to obtain or optimize other second parameter information through a fourth artificial intelligence network model structure or fourth artificial intelligence network model parameter, or whether to obtain or optimize the positioning signal measurement information of the target terminal and/or location information of the target terminal through the target artificial intelligence network model;
fourth artificial intelligence network model structure; and
fourth artificial intelligence network model parameter.

In this embodiment of this application, optionally, the second parameter information is determined based on the first parameter information.

Optionally, as shown in FIG. 9, an embodiment of this application further provides a communication device 90 including a processor 91 and a memory 92. The memory 92 stores a program or instructions capable of running on the processor 91. When the program or the instructions are executed by the processor 91, the steps of the foregoing embodiment of the positioning method are implemented, with the same technical effects achieved. To avoid repetition, details are not described herein again.

An embodiment of this application further provides a communication device including a processor and a communication interface. The communication interface is configured to receive first positioning request information. The processor is configured to determine and/or send a target artificial intelligence network model and/or target artificial intelligence network model parameter in response to the first positioning request information, where the target artificial intelligence network model is used for obtaining or optimizing positioning signal measurement information of a target terminal and/or location information of a target terminal. This embodiment corresponds to the foregoing positioning method embodiment performed by the first communication device. All processes and implementations in the foregoing method embodiment are applicable to this embodiment, with the same technical effects achieved.

An embodiment of this application further provides a communication device including a processor and a communication interface. The communication interface is configured to send first positioning request information and receive a target artificial intelligence network model and/or target artificial intelligence network model parameter, where the target artificial intelligence network model is used for obtaining or optimizing positioning signal measurement information of a target terminal and/or location information of a target terminal. This embodiment corresponds to the foregoing positioning method embodiment performed by the second communication device. All processes and implementations in the foregoing method embodiment are applicable to this embodiment, with the same technical effects achieved.

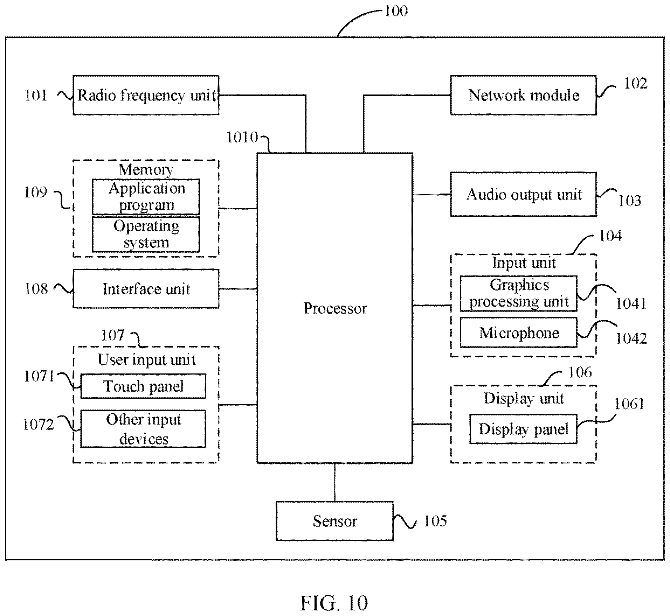

Specifically, FIG. 10 is a schematic diagram of a hardware structure of a terminal implementing an embodiment of this application. The terminal 100 includes but is not limited to at least part of these components: a radio frequency unit 101, a network module 102, an audio output unit 103, an input unit 104, a sensor 105, a display unit 106, a user input unit 107, an interface unit 108, a memory 109, a processor 1010, and the like.

It can be understood by those skilled in the art that the terminal 100 may further include a power supply (for example, battery) supplying power to the components. The power supply may be logically connected to the processor 1010 via a power management system, so that functions such as charge management, discharge management, and power consumption management are implemented via the power management system. The structure of the terminal shown in FIG. 10 does not constitute any limitation on the terminal, and the terminal may include more or fewer components than shown in the figure, or combine some of the components, or have different arrangements of the components. Details are not described herein.

It should be understood that in this embodiment of this application, the input unit 104 may include a graphics processing unit (Graphics Processing Unit, GPU) 1041 and a microphone 1042. The graphics processing unit 1041 processes image data of still pictures or videos that are obtained by an image capture apparatus (for example, camera) in an image or video capture mode. The display unit 106 may include a display panel 1061. The display panel 1061 may be configured in a form of a liquid crystal display, an organic light-emitting diode display, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. Specifically, the other input devices 1072 may include but are not limited to a physical keyboard, a function button (for example, volume control button or on/off button), a trackball, a mouse, and a joystick. Details are not described herein.

In this embodiment of this application, the radio frequency unit 101 receives downlink data from a network-side device and transfers the data to the processor 1010 for processing; and the radio frequency unit 101 may additionally send uplink data to the network-side device. Generally, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may include a first storage are for storing programs or instructions and a second storage area for storing data. The first storage area may store an operating system, an application program or instructions required by at least one function (for example, a sound playback function or an image playback function), and the like. In addition, the memory 109 may include a volatile memory or a non-volatile memory, or the memory 109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 109 of this embodiment of this application includes but is not be limited to these and any other applicable types of memories.

The processor 1010 may include one or more processing units. Optionally, the processor 1010 may integrate an application processor and a modem processor. The application processor primarily processes operations involving an operating system, user interface, application program, or the like. The modem processor primarily processes radio communication, for example, being a baseband processor. It can be understood that the modem processor may alternatively be not integrated in the processor 1010.

The radio frequency unit 101 is configured to receive first positioning request information.

The processor 1010 is configured to determine and/or send a target artificial intelligence network model and/or target artificial intelligence network model parameter in response to the first positioning request information, where the target artificial intelligence network model is used for obtaining or optimizing positioning signal measurement information of a target terminal and/or location information of a target terminal.

In this embodiment of this application, the terminal negotiates, with a second communication device in response to the request of the second communication device, the artificial intelligence network model and/or artificial intelligence network model parameter used for obtaining or optimizing the positioning signal measurement information of the target terminal and/or location information of the target terminal. This allows the positioning signal measurement information and/or location information of the target terminal to be obtained or optimized based on the artificial intelligence network model negotiated, thereby reducing positioning errors and improving accuracy of positioning results.

In this embodiment of this application, optionally, the first positioning request information includes at least one of the following:
first measurement information;
identity document ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, where the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

In this embodiment of this application, optionally, the first measurement information includes at least one of the following:
positioning signal measurement information of the target terminal;
location information of the target terminal; and
error information, where the error information includes at least one of the following: location error value, measurement error value, and artificial intelligence network model error value or parameter error value.

In this embodiment of this application, optionally, the positioning signal measurement information of the target terminal includes at least one of the following:
channel response information of positioning signal;
reference signal time difference RSTD measurement result;
round-trip time RTT;
angle of arrival AOA measurement result;
angle of departure AOD measurement result; and
reference signal received power RSRP.

In this embodiment of this application, optionally, the positioning signal measurement information is associated with or includes at least one piece of line of sight LOS indication information, or includes positioning signal measurement information of at least one path.

In this embodiment of this application, optionally, the LOS indication information includes at least one of the following:
first bit used to indicate LOS or non-line-of-sight NLOS;
second bit used to indicate a probability of being LOS; and
third bit used to indicate a confidence coefficient of being LOS.

In this embodiment of this application, optionally, the LOS indication information includes at least one of the following:
first bit used to indicate whether positioning signal measurement is LOS or non-line-of-sight NLOS;
second bit used to indicate a probability of positioning signal measurement being LOS; and
third bit used to indicate a confidence coefficient of positioning signal measurement being LOS.

In this embodiment of this application, optionally, the artificial intelligence network model parameter includes at least one of the following:
structure of artificial intelligence network model;
multiplicative coefficient, additive coefficient and/or activation function of each neuron of artificial intelligence network model;
complexity information of artificial intelligence network model;
expected training count of artificial intelligence network model;
application document of artificial intelligence network model;
input format of artificial intelligence network model; and
output format of artificial intelligence network model.

In this embodiment of this application, optionally, the type information of artificial intelligence network model includes at least one of the following:
fully connected model;
first type, where the first type is terminal location information obtained by a first communication device based on the artificial intelligence network model;
second type, where the second type is terminal positioning signal measurement information obtained by the first communication device based on the artificial intelligence network model;
third type, where the third type is terminal positioning signal measurement information obtained by the first communication device under assistance of the second communication device based on the artificial intelligence network model;
fourth type, where the fourth type is terminal location information obtained by the first communication device under assistance of the second communication device based on the artificial intelligence network model;
sixth type, where the sixth type is terminal location information obtained by the second communication device under instruction of the first communication device based on the artificial intelligence network model;
seventh type, where the seventh type is terminal location information obtained by the second communication device under instruction of the first communication device based on the artificial intelligence network model;
eighth type, where the eighth type is one of terminal positioning signal measurement information and terminal location information obtained by the first communication device based on the artificial intelligence network model, or the other of the terminal positioning signal measurement information or terminal location information obtained by the second communication device based on the artificial intelligence network model; and
unsupervised model or supervised model.

In this embodiment of this application, optionally, the processor 1010 is further configured to send or receive pre-configured information, where the pre-configured information includes at least one of the following:
one or more pre-configured artificial intelligence network models; and
one or more sets of pre-configured artificial intelligence network model parameters.

In this embodiment of this application, optionally, each pre-configured artificial intelligence network model or artificial intelligence network model parameter includes one piece of ID information.

In this embodiment of this application, optionally, the processor 1010 is further configured to send at least two target artificial intelligence network models and/or target artificial intelligence network model parameters.

In this embodiment of this application, optionally, the first positioning request information further includes:
LOS confidence coefficient; and
second information.

In this embodiment of this application, optionally, the second information includes at least one of the following:
second artificial intelligence network model used to determine LOS indication information;
channel impulse response CIR;
power of first path;
power of multipath;
delay of first path;
time of arrival TOA of first path;
reference signal time difference RSTD of first path;
delay of multipath;
TOA of multipath;
RSTD of multipath;
angle of arrival of first path;
angle of arrival of multipath; and
antenna subcarrier phase difference of first path;
antenna subcarrier phase difference of multipath;
average excess delay;
root mean square delay spread; and
coherence bandwidth.

In this embodiment of this application, optionally, the first parameter information includes at least one of the following:
length of CIR;
number of paths in multipath;
bandwidth of CIR;
frequency domain information of signal;
time information;
phase information;
angle information;
energy information;
CIR information processed based on third artificial intelligence model or third artificial intelligence model parameter; and
multipath information processed based on third artificial intelligence model or third artificial intelligence model parameter.

In this embodiment of this application, optionally, the first parameter information further includes at least one of the following:
third artificial intelligence network model structure; and
third artificial intelligence network model parameter.

In this embodiment of this application, optionally, the processor 1010 is further configured to send second parameter information, where the second parameter information includes at least one of the following:
CIR;
multipath measurement result of first positioning reference signal;
time information;
phase information;
angle information;
energy information;
second indication information, where the second indication information is used to indicate whether to obtain or optimize other second parameter information through a fourth artificial intelligence network model structure or fourth artificial intelligence network model parameter, or whether to obtain or optimize the positioning signal measurement information of the target terminal and/or location information of the target terminal through the target artificial intelligence network model;
fourth artificial intelligence network model structure; and
fourth artificial intelligence network model parameter.

In this embodiment of this application, optionally, the second parameter information is determined based on the first parameter information.

In this embodiment of this application, optionally, the processor 1010 is further configured to report capability information, where the capability information includes at least one of the following:
whether the artificial intelligence network model or artificial intelligence network model parameter based on the first positioning request information is supported;
whether multiple artificial intelligence network models or multiple sets of artificial intelligence network model parameters are supported; and
whether obtaining or optimizing positioning signal measurement information and/or location information through an artificial intelligence network model or artificial intelligence network model parameter is supported.

Alternatively, the radio frequency unit 101 is configured to send first positioning request information, and receive a target artificial intelligence network model and/or target artificial intelligence network model parameter, where the target artificial intelligence network model is used for obtaining or optimizing positioning signal measurement information of a target terminal and/or location information of a target terminal.

In this embodiment of this application, optionally, the first positioning request information includes at least one of the following:
first measurement information;
identity document ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, where the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

In this embodiment of this application, optionally, the first measurement information includes at least one of the following:
positioning signal measurement information of the target terminal;
location information of the target terminal; and
error information, where the error information includes at least one of the following: location error value, measurement error value, and artificial intelligence network model error value or parameter error value.

In this embodiment of this application, optionally, the positioning signal measurement information of the target terminal includes at least one of the following:
channel response information of positioning signal;
reference signal time difference RSTD measurement result;
round-trip time RTT;
angle of arrival AOA measurement result;
angle of departure AOD measurement result; and
reference signal received power RSRP.

In this embodiment of this application, optionally, the positioning signal measurement information is associated with or includes at least one piece of line of sight LOS indication information, or includes positioning signal measurement information of at least one path.

In this embodiment of this application, optionally, the LOS indication information includes at least one of the following:
first bit used to indicate LOS or non-line-of-sight NLOS;
second bit used to indicate a probability of being LOS; and
third bit used to indicate a confidence coefficient of being LOS.

In this embodiment of this application, optionally, the LOS indication information includes at least one of the following:
first bit used to indicate whether positioning signal measurement is LOS or non-line-of-sight NLOS;
second bit used to indicate a probability of positioning signal measurement being LOS; and
third bit used to indicate a confidence coefficient of positioning signal measurement being LOS.

In this embodiment of this application, optionally, the artificial intelligence network model parameter includes at least one of the following:
structure of artificial intelligence network model;
multiplicative coefficient, additive coefficient and/or activation function of each neuron of artificial intelligence network model;
complexity information of artificial intelligence network model;
expected training count of artificial intelligence network model;
application document of artificial intelligence network model;
input format of artificial intelligence network model; and
output format of artificial intelligence network model.

In this embodiment of this application, optionally, the type information of artificial intelligence network model includes at least one of the following:
fully connected model;
first type, where the first type is terminal location information obtained by the first communication device based on the artificial intelligence network model;
second type, where the second type is terminal positioning signal measurement information obtained by the first communication device based on the artificial intelligence network model;
third type, where the third type is terminal positioning signal measurement information obtained by a first communication device under assistance of the second communication device based on the artificial intelligence network model;
fourth type, where the fourth type is terminal location information obtained by a first communication device under assistance of the second communication device based on the artificial intelligence network model;
sixth type, where the sixth type is terminal location information obtained by the second communication device under instruction of the first communication device based on the artificial intelligence network model;
seventh type, where the seventh type is terminal location information obtained by the second communication device under instruction of a first communication device based on the artificial intelligence network model;
eighth type, where the eighth type is one of terminal positioning signal measurement information and terminal location information obtained by a first communication device based on the artificial intelligence network model, or the other of the terminal positioning signal measurement information or terminal location information obtained by the second communication device based on the artificial intelligence network model; and
unsupervised model or supervised model.

In this embodiment of this application, optionally, the first positioning request information further includes:
LOS confidence coefficient; and
second information.

In this embodiment of this application, optionally, the second information includes at least one of the following:
second artificial intelligence network model used to determine LOS indication information;
channel impulse response CIR;
power of first path;
power of multipath;
delay of first path;
time of arrival TOA of first path;
reference signal time difference RSTD of first path;
delay of multipath;
TOA of multipath;
RSTD of multipath;
angle of arrival of first path;
angle of arrival of multipath; and
antenna subcarrier phase difference of first path;
antenna subcarrier phase difference of multipath;
average excess delay;
root mean square delay spread; and
coherence bandwidth.

In this embodiment of this application, optionally, the first parameter information includes at least one of the following:
length of CIR;
number of paths in multipath;
bandwidth of CIR;
frequency domain information of signal;
time information;
phase information;
angle information;
energy information;
CIR information processed based on third artificial intelligence model or third artificial intelligence model parameter; and
multipath information processed based on third artificial intelligence model or third artificial intelligence model parameter.

In this embodiment of this application, optionally, the first parameter information further includes at least one of the following:
third artificial intelligence network model structure; and
third artificial intelligence network model parameter.

In this embodiment of this application, optionally, the radio frequency unit 101 is further configured to send second parameter information, where the second parameter information includes at least one of the following:
CIR;
multipath measurement result of first positioning reference signal;
time information;
phase information;
angle information;
energy information;
second indication information, where the second indication information is used to indicate whether to obtain or optimize other second parameter information through a fourth artificial intelligence network model structure or fourth artificial intelligence network model parameter, or whether to obtain or optimize the positioning signal measurement information of the target terminal and/or location information of the target terminal through the target artificial intelligence network model;
fourth artificial intelligence network model structure; and
fourth artificial intelligence network model parameter.

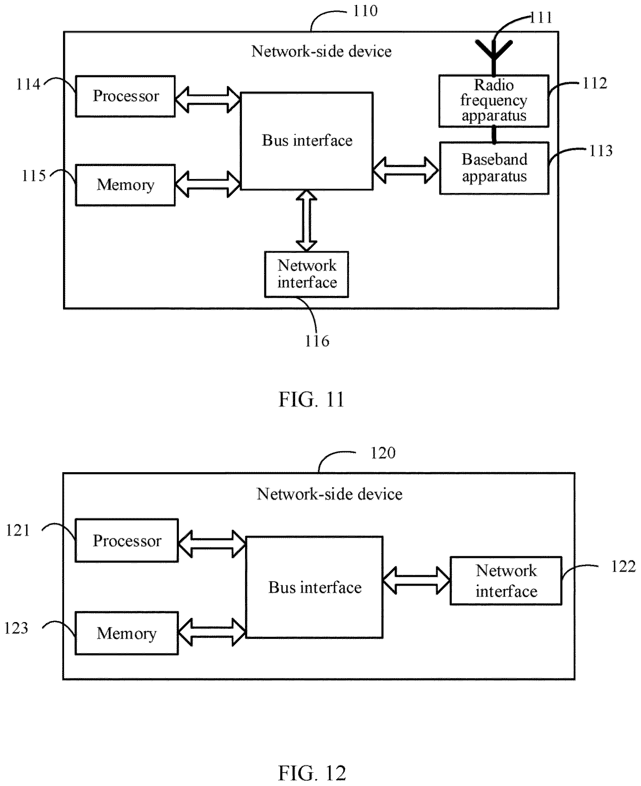

In this embodiment of this application, optionally, the second parameter information is determined based on the first parameter information. Specifically, an embodiment of this application further provides a network-side device. As shown in FIG. 11, the network-side device 110 includes an antenna 111, a radio frequency apparatus 112, a baseband apparatus 113, a processor 114, and a memory 115. The antenna 111 is connected to the radio frequency apparatus 112. In uplink, the radio frequency apparatus 112 receives information through the antenna 111, and sends the received information to the baseband apparatus 113 for processing. In downlink, the baseband apparatus 113 processes to-be-sent information, and sends the information to the radio frequency apparatus 112. The radio frequency apparatus 112 processes the received information and sends the information out through the antenna 111.

The method executed by the network-side device in the foregoing embodiments may be implemented on the baseband apparatus 113. The baseband apparatus 113 includes a baseband processor.

The baseband apparatus 113 may include, for example, at least one baseband processing unit, where a plurality of chips are disposed on the baseband processing unit. As shown in FIG. 11, one of the chips is, for example, a baseband processor, and connected to the memory 115 through a bus interface, to invoke the program in the memory 115 to perform the operations of the network device shown in the foregoing method embodiment.

The network-side device further includes a network interface 116, where the interface is, for example, a common public radio interface (Common Public Radio Interface, CPRI).

Specifically, the network-side device 1100 in this embodiment of the present invention further includes: an instruction or program stored in the memory 115 and executable on the processor 114. The processor 114 invokes the instruction or program in the memory 115 to execute the method executed by the modules shown in FIG. 8, with the same technical effects achieved. To avoid repetition, details are not described herein again.

Specifically, an embodiment of this application further provides a network-side device. As shown in FIG. 12, the network-side device 120 includes a processor 121, a network interface 122, and memory 123. The network interface 122 is, for example, a common public radio interface (Common Public Radio Interface, CPRI).

Specifically, the network-side device 120 in this embodiment of the present invention further includes: an instruction or program stored in the memory 123 and executable on the processor 121. The processor 121 invokes the instruction or program in the memory 123 to execute the method executed by the modules shown in FIG. 8, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing positioning method embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing positioning method embodiments, with the same technical effect achieved. To avoid repetition, details are not described herein again.

It should be understood that the chip mentioned in an embodiment of this application may also be referred to as a system-level chip, a system chip, a chip system, a system-on-chip, or the like.

An embodiment of this application further provides a computer program or program product, where the computer program or program product is stored in a readable storage medium, and the computer program product is executed by at least one processor to implement the processes of the foregoing positioning method embodiments, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A positioning method, comprising:
receiving, by a first communication device, first positioning request information; and
determining and/or sending, by the first communication device, a target artificial intelligence network model and/or target artificial intelligence network model parameter in response to the first positioning request information, wherein the target artificial intelligence network model is used for obtaining or optimizing positioning signal measurement information of a target terminal and/or location information of a target terminal.

2. The positioning method according to claim 1, wherein the first positioning request information comprises at least one of the following:
first measurement information;
identity document ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, wherein the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

3. The positioning method according to claim 2, wherein the first measurement information comprises at least one of the following:
positioning signal measurement information of the target terminal;
location information of the target terminal; and
error information, wherein the error information comprises at least one of the following: location error value, measurement error value, and artificial intelligence network model error value or parameter error value.

4. The positioning method according to claim 3, wherein the positioning signal measurement information of the target terminal comprises at least one of the following:
channel response information of positioning signal;
reference signal time difference RSTD measurement result;
round-trip time RTT;
angle of arrival AOA measurement result;
angle of departure AOD measurement result; and
reference signal received power RSRP.

5. The positioning method according to claim 3, wherein the positioning signal measurement information is associated with or comprises at least one piece of line of sight LOS indication information, or comprises positioning signal measurement information of at least one path.

6. The positioning method according to claim 5, wherein the LOS indication information comprises at least one of the following:
first bit used to indicate LOS or non-line-of-sight NLOS;
second bit used to indicate a probability of being LOS; and
third bit used to indicate a confidence coefficient of being LOS.

7. The positioning method according to claim 6, wherein the LOS indication information comprises at least one of the following:
first bit used to indicate whether positioning signal measurement is LOS or non-line-of-sight NLOS;
second bit used to indicate a probability of positioning signal measurement being LOS; and
third bit used to indicate a confidence coefficient of positioning signal measurement being LOS.

8. The positioning method according to claim 2, wherein the artificial intelligence network model parameter comprises at least one of the following:
structure of artificial intelligence network model;
multiplicative coefficient, additive coefficient and/or activation function of each neuron of artificial intelligence network model;
complexity information of artificial intelligence network model;
expected training count of artificial intelligence network model;
application document of artificial intelligence network model;
input format of artificial intelligence network model; and
output format of artificial intelligence network model.

9. The positioning method according to claim 2, wherein the type information of artificial intelligence network model comprises at least one of the following:
fully connected model;
first type, wherein the first type is terminal location information obtained by the first communication device based on the artificial intelligence network model;
second type, wherein the second type is terminal positioning signal measurement information obtained by the first communication device based on the artificial intelligence network model;
third type, wherein the third type is terminal positioning signal measurement information obtained by the first communication device under assistance of a second communication device based on the artificial intelligence network model;
fourth type, wherein the fourth type is terminal location information obtained by the first communication device under assistance of the second communication device based on the artificial intelligence network model;
sixth type, wherein the sixth type is terminal location information obtained by the second communication device under instruction of the first communication device based on the artificial intelligence network model;
seventh type, wherein the seventh type is terminal location information obtained by the second communication device under instruction of the first communication device based on the artificial intelligence network model;
eighth type, wherein the eighth type is one of terminal positioning signal measurement information and terminal location information obtained by the first communication device based on the artificial intelligence network model, or the other of the terminal positioning signal measurement information or terminal location information obtained by the second communication device based on the artificial intelligence network model; and
unsupervised model or supervised model.

10. The positioning method according to claim 1, before the determining and/or sending, by the first communication device, a target artificial intelligence network model and/or target artificial intelligence network model parameter in response to the first positioning request information, further comprising:
sending or receiving, by the first communication device, pre-configured information, wherein the pre-configured information comprises at least one of the following:
one or more pre-configured artificial intelligence network models; and
one or more sets of pre-configured artificial intelligence network model parameters.

11. The positioning method according to claim 10, wherein each pre-configured artificial intelligence network model or artificial intelligence network model parameter comprises one piece of ID information.

12. The positioning method according to claim 1, wherein the determining and/or sending, by the first communication device, a target artificial intelligence network model and/or target artificial intelligence network model parameter in response to the first positioning request information further comprises:
sending, by the first communication device, at least two target artificial intelligence network models and/or target artificial intelligence network model parameters in response to the first positioning request information.

13. The positioning method according to claim 2, wherein the first positioning request information further comprises:
LOS confidence coefficient; and
second information.

14. The positioning method according to claim 13, wherein the second information comprises at least one of the following:
second artificial intelligence network model used to determine LOS indication information;
channel impulse response CIR;
power of first path;
power of multipath;
delay of first path;
time of arrival TOA of first path;
reference signal time difference RSTD of first path;
delay of multipath;
TOA of multipath;
RSTD of multipath;
angle of arrival of first path;
angle of arrival of multipath;
antenna subcarrier phase difference of first path;
antenna subcarrier phase difference of multipath;
average excess delay;
root mean square delay spread; and
coherence bandwidth.

15. The positioning method according to claim 2, wherein the first parameter information comprises at least one of the following:
length of CIR;
number of paths in multipath;
bandwidth of CIR;
frequency domain information of signal;
time information;
phase information;
angle information;
energy information;
CIR information processed based on third artificial intelligence model or third artificial intelligence model parameter; and
multipath information processed based on third artificial intelligence model or third artificial intelligence model parameter.

16. The positioning method according to claim 15, wherein the first parameter information further comprises at least one of the following:
third artificial intelligence network model structure; and
third artificial intelligence network model parameter.

17. The positioning method according to claim 2, further comprising:
sending, by the first communication device, second parameter information, wherein the second parameter information comprises at least one of the following:
CIR;
multipath measurement result of first positioning reference signal;
time information;
phase information;
angle information;
energy information;
second indication information, wherein the second indication information is used to indicate whether to obtain or optimize other second parameter information through a fourth artificial intelligence network model structure or fourth artificial intelligence network model parameter, or whether to obtain or optimize the positioning signal measurement information of the target terminal and/or location information of the target terminal through the target artificial intelligence network model;
fourth artificial intelligence network model structure; and
fourth artificial intelligence network model parameter.

18. The positioning method according to claim 17, wherein the second parameter information is determined based on the first parameter information.

19. The positioning method according to claim 1, further comprising:
reporting, by the first communication device, capability information, wherein the capability information comprises at least one of the following:
whether the artificial intelligence network model or artificial intelligence network model parameter based on the first positioning request information is supported;
whether multiple artificial intelligence network models or multiple sets of artificial intelligence network model parameters are supported; and
whether obtaining or optimizing positioning signal measurement information and/or location information through an artificial intelligence network model or artificial intelligence network model parameter is supported.

20. A positioning method, comprising:
sending, by a second communication device, first positioning request information; and
receiving, by the second communication device, a target artificial intelligence network model and/or target artificial intelligence network model parameter, wherein the target artificial intelligence network model is used for obtaining or optimizing positioning signal measurement information of a target terminal and/or location information of a target terminal.

21. The positioning method according to claim 20, wherein the first positioning request information comprises at least one of the following:
first measurement information;
ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, wherein the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

22. The positioning method according to claim 21, wherein the first measurement information comprises at least one of the following:
positioning signal measurement information of the target terminal;
location information of the target terminal; and
error information, wherein the error information comprises at least one of the following: location error value, measurement error value, and artificial intelligence network model error value or parameter error value.

23. The positioning method according to claim 22, wherein the positioning signal measurement information of the target terminal comprises at least one of the following:
channel response information of positioning signal;
reference signal time difference RSTD measurement result;
round-trip time RTT;
angle of arrival AOA measurement result;
angle of departure AOD measurement result; and
reference signal received power RSRP.

24. The positioning method according to claim 22, wherein the positioning signal measurement information is associated with or comprises at least one piece of line of sight LOS indication information, or comprises positioning signal measurement information of at least one path.

25. The positioning method according to claim 24, wherein the LOS indication information comprises at least one of the following:
first bit used to indicate LOS or non-line-of-sight NLOS;
second bit used to indicate a probability of being LOS; and
third bit used to indicate a confidence coefficient of being LOS.

26. The positioning method according to claim 21, wherein the artificial intelligence network model parameter comprises at least one of the following:
structure of artificial intelligence network model;
multiplicative coefficient, additive coefficient and/or activation function of each neuron of artificial intelligence network model;
complexity information of artificial intelligence network model;
expected training count of artificial intelligence network model;
application document of artificial intelligence network model;
input format of artificial intelligence network model; and
output format of artificial intelligence network model.

27. The positioning method according to claim 21, wherein the type information of artificial intelligence network model comprises at least one of the following:
fully connected model;
first type, wherein the first type is terminal location information obtained by a first communication device based on the artificial intelligence network model;
second type, wherein the second type is terminal positioning signal measurement information obtained by the first communication device based on the artificial intelligence network model;
third type, wherein the third type is terminal positioning signal measurement information obtained by the first communication device under assistance of the second communication device based on the artificial intelligence network model;
fourth type, wherein the fourth type is terminal location information obtained by the first communication device under assistance of the second communication device based on the artificial intelligence network model;
sixth type, wherein the sixth type is terminal location information obtained by the second communication device under instruction of the first communication device based on the artificial intelligence network model;
seventh type, wherein the seventh type is terminal location information obtained by the second communication device under instruction of the first communication device based on the artificial intelligence network model;
eighth type, wherein the eighth type is one of terminal positioning signal measurement information and terminal location information obtained by the first communication device based on the artificial intelligence network model, or the other of the terminal positioning signal measurement information or terminal location information obtained by the second communication device based on the artificial intelligence network model; and
unsupervised model or supervised model.

28. The positioning method according to claim 21, wherein the first parameter information comprises at least one of the following:
length of CIR;
number of paths in multipath;
bandwidth of CIR;
frequency domain information of signal;
time information;
phase information;
angle information;
energy information;
CIR information processed based on third artificial intelligence model or third artificial intelligence model parameter; and
multipath information processed based on third artificial intelligence model or third artificial intelligence model parameter.

29. The positioning method according to claim 28, wherein the first parameter information further comprises at least one of the following:
third artificial intelligence network model structure; and
third artificial intelligence network model parameter.

30. The positioning method according to claim 21, further comprising:
receiving, by the second communication device, second parameter information, wherein the second parameter information comprises at least one of the following:
CIR;
multipath measurement result of first positioning reference signal;
time information;
phase information;
angle information;
energy information;
second indication information, wherein the second indication information is used to indicate whether to obtain or optimize other second parameter information through a fourth artificial intelligence network model structure or fourth artificial intelligence network model parameter, or whether to obtain or optimize the positioning signal measurement information of the target terminal and/or location information of the target terminal through the target artificial intelligence network model;
fourth artificial intelligence network model structure; and
fourth artificial intelligence network model parameter.

31. The positioning method according to claim 30, wherein the second parameter information is determined based on the first parameter information.

32. A positioning apparatus, comprising:
a first receiving module configured to receive first positioning request information; and
a first determining module configured to determine and/or send a target artificial intelligence network model and/or target artificial intelligence network model parameter in response to the first positioning request information, wherein the target artificial intelligence network model is used for obtaining or optimizing positioning signal measurement information of a target terminal and/or location information of a target terminal.

33. The positioning apparatus according to claim 32, wherein the first positioning request information comprises at least one of the following:
first measurement information;
identity document ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, wherein the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

34. A positioning apparatus, comprising:
a first sending module configured to send first positioning request information; and
a first receiving module configured to receive a target artificial intelligence network model and/or target artificial intelligence network model parameter, wherein the target artificial intelligence network model is used for obtaining or optimizing positioning signal measurement information of a target terminal and/or location information of a target terminal.

35. The positioning apparatus according to claim 34, wherein the first positioning request information comprises at least one of the following:
first measurement information;
ID of artificial intelligence network model and/or artificial intelligence network model parameter;
artificial intelligence network model;
some or all of artificial intelligence network model parameters;
complexity information of artificial intelligence network model;
type information of artificial intelligence network model;
first parameter information, wherein the first parameter information is used for determining input information and/or output information of artificial intelligence network model, used for determining network structure and/or parameter information of artificial intelligence network model, or used for determining positioning information reported or fed back; and
first indication information, used to indicate whether to request an artificial intelligence network model and/or artificial intelligence network model parameter.

36. A communication device, comprising a processor and a memory, wherein the memory stores a program or instructions capable of running on the processor, when the program or instructions are executed by the processor, the steps of the positioning method according to any one of claims 1 to 19 are implemented, or when the program or instructions are executed by the processor, the steps of the positioning method according to any one of claims 20 to 31 are implemented.

37. A readable storage medium, wherein the readable storage medium stores a program or instructions, and when the program or instructions are executed by a processor, the positioning method according to any one of claims 1 to 19 is implemented; or when the program or instructions are executed by a processor, the positioning method according to any one of claims 20 to 31 is implemented.
